# EUROPÄISCHE PATENTSCHRIFT

(11) **EP 3 374 820 B1**
(45) Veröffentlichungstag und Bekanntmachung des Hinweises auf die Patenterteilung: **27.11.2019**
(21) Anmeldenummer: 17777778.6
(22) Anmeldetag: 18.09.2017
(51) Int. Cl.: G02B 27/00, G02B 13/04

(54) **OBJEKTIV FESTER BRENNWEITE UND KONSTANTER BAULÄNGE FÜR AUTOFOKUSANWENDUNGEN**
OBJECTIVE WITH A FIXED FOCAL LENGTH AND A CONSTANT STRUCTURAL LENGTH FOR AUTOFOCUS APPLICATIONS
OBJECTIF DE DISTANCE FOCALE FIXE ET LONGUEUR CONSTANTE POUR APPLICATIONS DE MISE AU POINT AUTOMATIQUE

(30) Priorität: 18.09.2016 DE 102016117547
(43) Veröffentlichungstag der Anmeldung: 19.09.2018
(73) Patentinhaber: Leica Camera AG, 35578 Wetzlar (DE)
(72) Erfinder: STUIBLE, Dietmar, 35578 Wetzlar (DE); KAMMANS, Sigrun, 35745 Herborn (DE)
(74) Vertreter: Stamer, Jan
(86) Internationale Anmeldenummer: PCT/DE2017/100797
(87) Internationale Veröffentlichungsnummer: WO 2018/050175

(56) Entgegenhaltungen:
- JP-A- 2007 298 832
- JP-A- 2016 109 810
- US-A1- 2004 017 605

## Beschreibung

Die Erfindung betrifft ein auswechselbares Objektiv fester Brennweite gemäß dem Oberbegriff von Anspruch 1. Aus JP 2016 109810 A, JP 2007 298832 A und US 2004/017605 A1 sind gattungsgemäße Objektive bekannt.

Solche Objektive sind für fotografische Bildaufnahmezwecke aus der analogen Fotografie bekannt und werden ebenfalls für die digitale Bildaufnahme genutzt. Zunehmend verfügen digitale Kameras nicht mehr über einen in den Bildaufnahmestrahlengang ein- und ausschwenkbaren Spiegel, der das zu fotografierende Objektfeld zu Scharfstellzwecken und zur Auswahl des Bildausschnitts über ein Prisma in einen Sucher umlenkt, sondern die Bildauswahl erfolgt durch permanente Bildaufnahme mit dem Bildaufnahmesensor und anhand eines daraus gewonnenen, auf einem Display an der Rückseite der Kamera dargestellten Objektausschnitts oder mit Hilfe eines elektronischen Suchers (Electronic View Finder). Die Scharfstellung (Fokussierung) dieser Objektive erfolgt mit Hilfe von elektronischen Autofokussignalen und entsprechender Ansteuerung des Fokussiergliedes im Objektiv automatisch. Üblicherweise bestehen fotografische Objektive zur Erzeugung einer guten Abbildungsleistung aus zwei oder mehr Linsengruppen, die wiederum einzelne ortsfest oder entlang der optischen Achse verschiebbar gelagerte Linsenelemente aufweisen. Es ist bekannt, zur Fokussierung des Objektivs auf unterschiedliche Objektentfernungen eine entlang der optischen Achse verschiebbare Linsengruppe vorzusehen. Dies kann beispielsweise der Objektivkopf, also die der Objektebene zugewandte vordere Linsengruppe oder das komplette Objektiv sein. Eine solche Anordnung wird auch Gesamtfokussierung genannt. Bei dieser Art der Fokussierung ändert sich jedoch die Baulänge des Objektivs während der Fokussierung, was Nachteile hinsichtlich der Dichtigkeit mit sich bringt. Daher sind auch Objektive bekannt, bei denen ein im Objektiv verschiebbar gelagertes Linsenglied, das sogenannte Fokussierglied, entlang der optischen Achse verschoben wird. Eine solche Anordnung wird auch Innenfokussierung genannt. Zwar lassen sich Objektive dieser Bauart in weiten Bereichen von einer unendlichen Objektentfernung bis hin zum Nahbereich von wenigen Metern oder gar Zentimetern fokussieren, das heißt es erfolgt eine scharfe Abbildung des Objektes auf die Bildaufnahmeebene, aber gerade im Nahbereich nimmt die optische Abbildungsleistung ab. Optische Bildfehler, wie Verzeichnung, Bildfeldwölbung, Öffnungsfehler, Farbfehler und Koma nehmen zu. Die Bildergebnisse genügen dann trotz einer Fokussierung auf den gewünschten Objektabstand oftmals nicht mehr den Anforderungen an die Abbildungsleistung moderner Bildaufnahmesysteme. Wenn dennoch eine hohe Abbildungsleistung erreicht werden soll, sind komplizierte und teure Objektivkonstruktionen mit einer hohen Anzahl unterschiedlicher Linsen notwendig. Alternativ ist es bekannt zur Erhöhung der Abbildungsleistung bei Objektiven mit Gesamtfokussierung, vornehmlich im Nahbereich, ein zweites bewegliches Linsenelement, ein sogenanntes Floating Element vorzusehen, welches den Abbildungsfehlern entgegenwirkt, im Übrigen aber kaum Einfluss auf die Fokuslage hat.

Um Objektive variabler Brennweiten (Zoom-Objektive) zu realisieren, werden meist mindestens zwei, auf Kurven relativ zueinander verstellbare Linsenelemente oder Linsengruppen vorgesehen. Die Fokussierung erfolgt nach wie vor mit einem zur Fokussierung verstellbaren Fokuselement. Bei solchen bekannten Objektiven übernimmt demnach eine Gruppe aus zwei Linsengruppen die Brennweitenveränderung und davon unabhängig wird eine weitere Linsengruppe zur Fokussierung verwendet.

Ein solches Objektiv mit veränderbarer Brennweite ist zum Beispiel aus US 2013/0070124 A1 bekannt. Dieses Objektiv weist zur Brennweiten- und Fokusveränderung drei bewegbare Linsengruppen auf.

Aus US 8,619,374 B2 ist ein auswechselbares Objektiv mit veränderbarer Brennweite bekannt. Auf eine feststehende Frontlinsengruppe folgt eine axial verstellbare Linsengruppe zur Brennweitenänderung. Zwischen zwei weiteren feststehenden Linsengruppen sind zwei unabhängig voneinander verstellbare Fokussier-Linsengruppen eingefügt. Mit Hilfe der beiden Fokussier-Linsengruppen sollen in Abhängigkeit von der Brennweitenänderung entstehende Abbildungsfehler ausgeglichen werden.

Der Erfindung lag die Aufgabe zugrunde, bei auswechselbaren Objektiven mit fester Brennweite eine sehr hohe konstante Bildqualität bei der Fokussierung auf unterschiedliche Objektentfernungen von Unendlich bis in den extremen Nahbereich und einem Abbildungsmaßstab von bis zu 1:3 zu ermöglichen, wobei die zur Fokussierung benötigten Linsen einen einfachen Aufbau mit geringem Gewicht aufweisen sollten, um einen schnellen und leisen Autofokusantrieb mit hohen Beschleunigungen erreichen zu können. Weiterhin sollten die Objektive zur Verwendung an spiegellosen Aufnahmesystemen mit kurzem Auflagemaß geeignet sein, eine kurze Schnittweite aufweisen und gleichzeitig einen ausreichend großen Abstand zwischen Austrittspupille des Objektivs und der Abbildungsebene aufweisen. Zur Eignung für moderne Bildsensoren sollte der Lichteinfallswinkel in der Abbildungsebene, vom Lot her betrachtet, nicht zu groß werden.

Diese Aufgabe wird erfindungsgemäß durch die kennzeichnenden Merkmale des Anspruchs 1 gelöst. Vorteilhafte Weiterbildungen ergeben sich aus den Merkmalen der Unteransprüche.

Zu den in den Ansprüchen angegebenen Lösungsmerkmalen ist zu beachten, dass beim modernen Optik-Design üblicherweise automatische Korrektionsprogramme, wie z.B. "Code V" von Optical Research Associates, eingesetzt werden, die in der Lage sind, aus vorgegebenen Linsenfolgen und Brechkraftverteilungen Vorschläge für funktionsfähige Objektivsysteme mit einem für eine bestimmte Aufgabe optimierten Korrektionszustand zu berechnen. Aufgrund gezielter Veränderungen der angegebenen Parameter durch den Optikkonstrukteur wird der automatisch erreichte Korrektionszustand jeweils weiter verbessert.

Mit den Merkmalen des Anspruchs 1 lassen sich auf diese Weise bereits die Konstruktionsdaten für Radien, Linsendicken, Linsenabstände, Brechzahlen und Abbezahlen der einzusetzenden optischen Gläser gewinnen. Bei Berücksichtigung der in den Unteransprüchen angegebenen Merkmale lassen sich die Konstruktionsparameter schrittweise gezielt verbessern.

In der Zeichnung sind Ausführungsbeispiele des erfindungsgemäßen Objektivs maßstäblich dargestellt, Konstruktionsdaten können den den jeweiligen Figuren zugeordneten Tabellen entnommen werden. Für den Fachmann, einen Optikkonstrukteur, ist ersichtlich, dass der konstruktive Aufwand für erfindungsgemäße Objektive sinkt, wenn dafür eine geringere optische Abbildungsleistung akzeptiert wird.

Das wesentliche Lösungsmerkmal erfindungsgemäßer Objektive besteht darin, zwei entlang einer optischen Achse in Bezug auf eine Abbildungsebene verschiebbar gelagerte Fokussier-Linsengruppen in einem Objektivtubus vorzusehen, wobei eine Fokussiervordergruppe von der Objektseite her gesehen vor und eine Fokussierhintergruppe von der Objektseite her gesehen hinter einer feststehenden Mittelgruppe mit Linsen und Aperturblende (Irisblende) angeordnet sind. Durch die Steuerung der beiden Fokussier-Linsengruppen gemeinsam relativ zueinander und zu den ortsfest im Objektivtubus angeordneten übrigen Linsengruppen wird der beim Fokussieren auf unterschiedliche Objektentfernungen eingeführte Gang der Bildfehler vorteilhaft gegenseitig ausgeglichen. Zusätzlich weist ein erfindungsgemäßes Objektiv eine von der Objektseite her gesehen ortsfeste Front- und eine ortsfeste, der Abbildungsebene zugewandte Hinterlinsengruppe auf. Auf diese Weise kann ein Objektiv fester Brennweite realisiert werden, welches aus fünf Linsengruppen besteht, von denen drei ortsfest und zwei zu Fokussierzwecken entlang der optischen Achse verschiebbar gelagert sind.

Im Gegensatz zu Objektiven mit Gesamtfokussierung mit Floating Element übernehmen bei der erfindungsgemäßen Fokussierung (nachfolgend auch Doppelfokussierung genannt) die beiden Fokussier-Linsengruppen gemeinsam die Verschiebung der Fokuslage zur Fokussierung auf die Abbildungsebene. Der Hub der jeweiligen Fokussiergruppe für eine Fokussierung von Unendlich in die Naheinstellung (maximaler Verfahrweg entspricht Gesamthub) ist durch die mechanische Baulänge des Objektivs und das Motor-/Antriebskonzept des Autofokus beschränkt. Das Verhältnis der beiden jeweiligen Gesamthübe zueinander kann dabei 1 oder auch ungleich 1 sein. Es ergibt sich aus konstruktionsbedingten räumlichen Beschränkungen und kann zur Optimierung der Aberrationen variiert werden.

Erfindungsgemäß weisen dabei die Frontlinsengruppe positive und die Mittelgruppe sowie die Hinterlinsengruppe negative Brechkraft auf.

Bei einer besonderen Ausführungsform der Objektive weisen die Fokussiervordergruppe und die Fokussierhintergruppe positive Brechkraft auf, wobei die Fokussiervordergruppe und die Fokussierhintergruppe als Einzellinsen ausgeführt sind. Sie können aber jeweils auch als Linsenduplett ausgeführt sein, wobei die positive Gesamtbrechkraft jeweils erhalten bleibt.

Beim Fokussieren von Unendlich in die Naheinstellung bewegen sich die Fokussierglieder von der Abbildungsebene weg.

Bei Objektiven für das bekannte Kleinbildformat (Bildkreisdurchmesser 43,3mm) mit langer Brennweite, sogenannten Teleobjektiven, mit Brennweiten von z.B. 55mm bis 185mm, hat es sich als vorteilhaft herausgestellt, in der Frontlinsengruppe bevorzugt Linsen mit positiven Brechkräften zu verwenden. Um eine günstige Verteilung der Brechkräfte aller Linsengruppen besonders vorteilhaft an konstruktive Vorgaben anzupassen, hat sich eine Mittelgruppe mit negativer Brechkraft als vorteilhaft erwiesen. Insbesondere gewährleistet dies auch eine günstige Verteilung der Brechkräfte in der hinteren Baugruppe und die Einhaltung konstruktiver Vorgaben, die sich beispielsweise aus den vorgegebenen maximalen Außenmaßen des Objektivs, den vorgegebenen maximalen Blenden- und Linsendurchmessern und aus den beschränkenden Maßen des Kamerabajonetts, insbesondere dessen freien Innendurchmessers ergeben.

Auf diese Weise lassen sich bevorzugt ein 75mm- oder ein 90mm-Objektiv, jeweils mit einer Offenblendenzahl von 1,4 oder 2,0, realisieren, wobei sich die Brennweitenangaben auf das Kleinbildformat (Bildkreisdurchmesser 43,3 mm) beziehen. Für den Fachmann ist es möglich, unter Einhaltung der in den Patentansprüchen angegebenen Parameter, Objektive mit kleinerer (bis z.B. 0,9) oder größerer (z.B. 4,0) Offenblendenzahl zu realisieren. Bei kleinerer Offenblendenzahl steigt der konstruktive Aufwand, welches ungünstige Auswirkungen auf das Objektivvolumen, die Zahl der nötigen Linsen und die Linsendurchmesser hat, wenn die optische Abbildungsleistung (Aberrationen) nicht zu stark nachlassen soll. Bei größerer Offenblendenzahl dagegen sinkt üblicherweise bei gleichbleibender oder schlechterer Abbildungsleistung der konstruktive Aufwand.

Eine Skalierung der geometrischen Daten des Objektivs auf andere Bildformate ist unter Beibehaltung der jeweiligen Offenblendenzahl möglich und bewirkt eine entsprechende Skalierung der Brennweite. Auf diese Weise realisierte Objektive, mit ansonsten bezüglich der Erfindung übereinstimmenden konstruktiven Merkmalen sind ebenfalls Gegenstand der Erfindung und fallen unter den Schutzumfang der Patentansprüche.

In einer besonderen Ausführungsform des erfindungsgemäßen Objektivs liegen das Verhältnis f1/f der Brennweiten f1 der Frontlinsengruppe und f des gesamten Objektivs zwischen 0,5 und 30, das Verhältnis f2/f der Brennweiten f2 der Fokussiervordergruppe und f des gesamten Objektivs zwischen 0,3 und 10, das Verhältnis f3/f der Brennweiten f3 der Mittelgruppe und f des gesamten Objektivs zwischen -30 und -0,3, das Verhältnis f4/f der Brennweiten f4 der Fokussierhintergruppe und f des gesamten Objektivs zwischen 0,1 und 10 und das Verhältnis f5/f der Brennweiten f5 der Hinterlinsengruppe und f des gesamten Objektivs zwischen -40 und -0,1.

In einem ersten Optimierungsschritt des Verhältnisses f1/f hat sich die Einschränkung auf einen Bereich zwischen 1,5 und 10 als günstig erwiesen. Um eine übermäßige Empfindlichkeit hinsichtlich einzuhaltender Montagetoleranzen zu vermeiden, ist es besonders vorteilhaft, das Verhältnis nach unten (betragsmäßig kleine Werte) zu beschränken, und um eine möglichst kompakten Baugröße zu erreichen, ist das Verhältnis f1/f nach oben (betragsmäßig große Werte) zu beschränken. Eine hinsichtlich Montagetoleranzen und Baugröße optimierte Ausführung der Erfindung weist daher ein Verhältnis f1/f zwischen 2,6 und 2,9 auf.

Bei einer besonderen Ausführungsform des erfindungsgemäßen Objektivs kann eine Verringerung des Fokussierhubes der Fokussiervordergruppe und der Baulänge des Objektivs durch eine Einschränkung des Verhältnisses f2/f auf einen Bereich zwischen 0,5 und 2,0 erreicht werden. Im Allgemeinen sind kleine Fokussierhübe vorteilhaft für eine schnelle Fokussierung, sie erhöhen jedoch auch die Toleranzempfindlichkeit. Ein zu großer Fokussierhub hingegen erhöht einerseits die Baulänge und erfordert andererseits leistungsstarke und schnelle motorische Antriebe mit hohem Energieverbrauch für die Fokussierung. Für eine erfindungsgemäße Doppelfokussierung ist deshalb die Einschränkung des Verhältnisses f2/f auf einen Bereich zwischen 0,8 und 1,1 besonders vorteilhaft.

Eine in gleicher Weise für die Fokussierhintergruppe durchgeführte vorteilhafte Optimierung zeigt sich bei einer Einschränkung des Verhältnisses f4/f auf einen Bereich zwischen 0,3 und 2,0, wobei sich eine weitere Optimierung durch eine Einschränkung auf einen Bereich zwischen 0,6 und 0,8 erreichen lässt.

Eine vorteilhafte Ausgestaltung der Linsen der Mittelgruppe hinsichtlich Fertigungstoleranzen und Baugröße wird durch eine Einschränkung des Verhältnisses f3/f auf einen Bereich zwischen -10 und -0,8 erzielt, wobei eine erfindungsgemäße Optimierung bei einem Verhältnis f3/f in einem Bereich zwischen -1,8 und -1,1 liegt.

Bei betragsmäßig großen Werten des Verhältnisses f5/f der Hinterlinsengruppe ergibt sich eine ungünstig große Baulänge, bei betragsmäßig kleinen Werten wird die Linsengruppe empfindlich hinsichtlich Montagetoleranzen. Eine vorteilhafte Optimierung besteht daher in einer Einschränkung des Verhältnisses f5/f auf einen Bereich zwischen -2,0 und -0,5. Insbesondere bei Objektiven für spiegellose photographische Kameras, bei denen erfahrungsgemäß sehr kurze Abstände zwischen der in Lichtrichtung letzten (nahe der Abbildungsebene gelegenen) Linse und der Abbildungsebene vorliegen, ist es von Vorteil, den Lichteinfallswinkel, vom Lot auf die Abbildungsebene her betrachtet, nicht zu groß auszuführen. Ein Lichteinfallswinkel kleiner 35° hat sich als vorteilhaft erwiesen. Die Objektive sind damit für Kamerasysteme mit kurzem Auflagemaß und kurzer Schnittweite, z.B. jeweils kleiner 25mm, bezogen auf das zuvor beschriebene Kleinbildformat, besonders geeignet. Betragsmäßig zu kleine Werte des Verhältnisses f5/f wirken sich daher ungünstig aus, da sie den Lichteinfallswinkel erhöhen und damit die Vignettierung zunimmt. Eine bezüglich dieser Problematik optimierte Ausführung des Objektivs weist daher für das Verhältnis f5/f einen Wert im Bereich zwischen -1,0 und -0,8 auf.

In einer erfindungsgemäßen Weiterbildung weist das Objektiv ein Verhältnis der Gesamtbrennweite f zum Bildkreisdurchmesser in der Abbildungsebene zwischen 1 und 5 auf. Auf diese Weise und durch das Zusammenwirken der zuvor genauer definierten Brechkräfte der fünf Linsengruppen lassen sich Objektive mit einer Brennweite zwischen 43,3mm und 216,5mm, bezogen auf das zuvor beschriebene Kleinbildformat, realisieren.

Vorteilhaft für eine hohe Fokussiergeschwindigkeit sind leichte Fokussiergruppen. Ein Verhältnis des Volumens V jeweils der Fokussiervorder- und Fokussierhintergruppe zum Bildkreisdurchmesser in der Abbildungsebene ist in der dritten Potenz kleiner als 0,1 (V / Bd³ < 0,1) und liegt insbesondere unter 0,08 (V / Bd³ < 0,08). Besonders vorteilhaft weist die jeweilige Fokussiergruppe ein Gewicht von unter 10 g (Gramm) auf. Der Wert für das relative Volumen von 0,08 entspricht dann, bezogen auf das Kleinbildformat, bei einem leichten Glas, wie zum Beispiel N-PSK53A der Firma Schott, einem Gewicht von 23,2 g und bei einem schweren Glas, wie zum Beispiel N-LASF31A der Firma Schott, einem Gewicht von 35,8 g. Bei Mittelformatsystemen mit 1,5 fach größerem Bildkreisdurchmesser ergeben sich somit Linsengewichte von 78,3g bei einem leichten Glas bzw. 120,8 g bei einem schweren Glas. Bei APS-Systemen mit 1,5 fach kleinerem Bildkreisdurchmesser ergeben sich somit Linsengewichte von 6,9 g bei einem leichten Glas bzw. 10,6 g bei einem schweren Glas.

Ein geringes Gewicht ist vorteilhaft für die Fokussiergeschwindigkeit und wirkt sich vorteilhaft auf Motor- und Geräuschkonzepte aus.

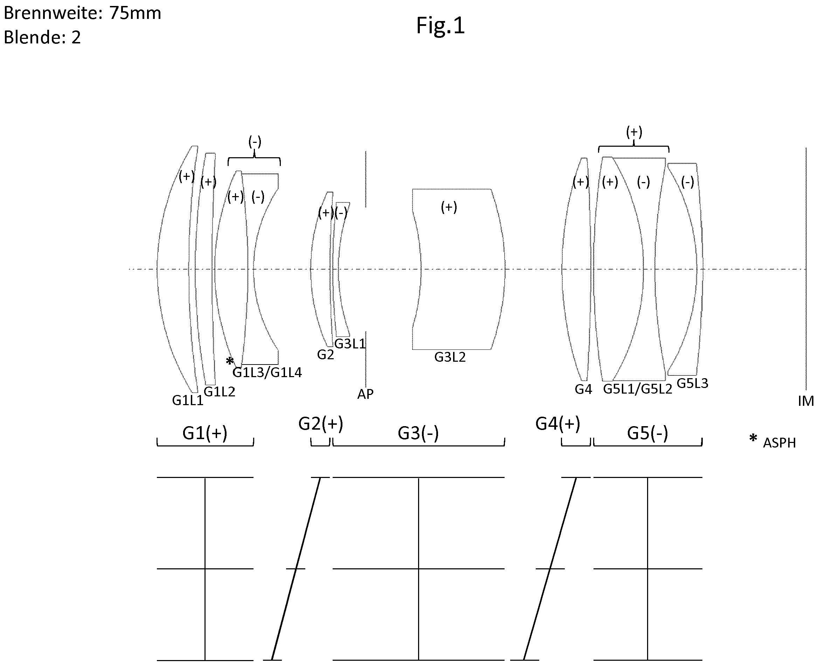

In einer besonderen Ausführungsform des erfindungsgemäßen Objektivs besteht die feststehende Frontlinsengruppe mit positiver Gesamtbrechkraft aus vier Linsengliedern, wobei das erste, zweite und dritte Linsenglied positive und das vierte Linsenglied negative Brechkraft aufweisen und wobei vorzugsweise das dritte und vierte Linsenglied zu einem Linsenduplett negativer Gesamtbrechkraft zusammengefasst sind. Dieses Linsenduplett kann als Kittglied oder aus Einzellinsen gefasst ausgeführt sein. Ein Ausführungsbeispiel mit einer erfindungsgemäßen Frontlinsengruppe ist als Objektiv 1:2 75mm in Fig. 1 der Zeichnung dargestellt und wird anhand der Zeichnung noch genauer beschrieben. In einer weiteren Ausführungsform weist die Frontlinsengruppe bei im Wesentlichen gleichem Aufbau das zweite Linsenglied mit negativer Brechkraft auf, wobei das dritte Linsenglied positive und das vierte Linsenglied negative Brechkraft aufweisen und zu einem Linsenduplett positiver Gesamtbrechkraft zusammengefasst sind. Eine alternative Ausgestaltung der Frontlinsengruppe weisen ein erstes und zweites Linsenglied positiver und ein drittes Linsenglied negativer Brechkraft auf, wobei das zweite und dritte Linsenglied zu einem Linsenduplett mit negativer Gesamtbrechkraft zusammengefasst sind.

Die Fokussiervordergruppe und die Fokussierhintergruppe können jeweils als Einzellinse mit positiver Brechkraft, aber auch als Linsenduplett ausgeführt sein, wobei die positive Gesamtbrechkraft jeweils erhalten bleibt.

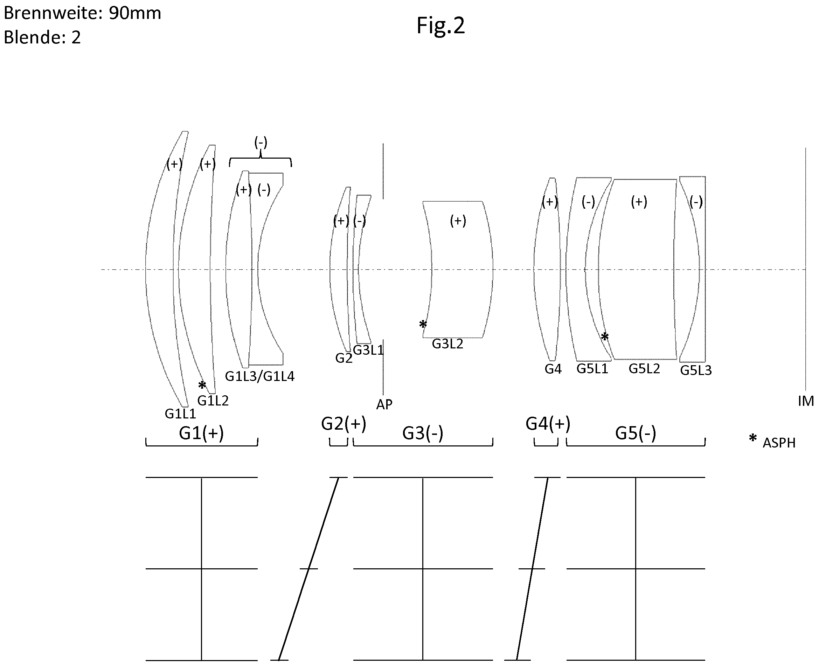

Die feststehende Mittelgruppe mit negativer Gesamtbrechkraft besteht aus zwei Linsengliedern, zwischen denen die Aperturblende (Irisblende) angeordnet ist und das erste Linsenglied negative und das zweite Linsenglied positive Brechtkraft aufweisen. Ein Ausführungsbeispiel mit einer erfindungsgemäßen Mittelgruppe ist als Objektiv 1:2 90mm in Fig. 2 der Zeichnung dargestellt und wird anhand der Zeichnung noch genauer beschrieben.

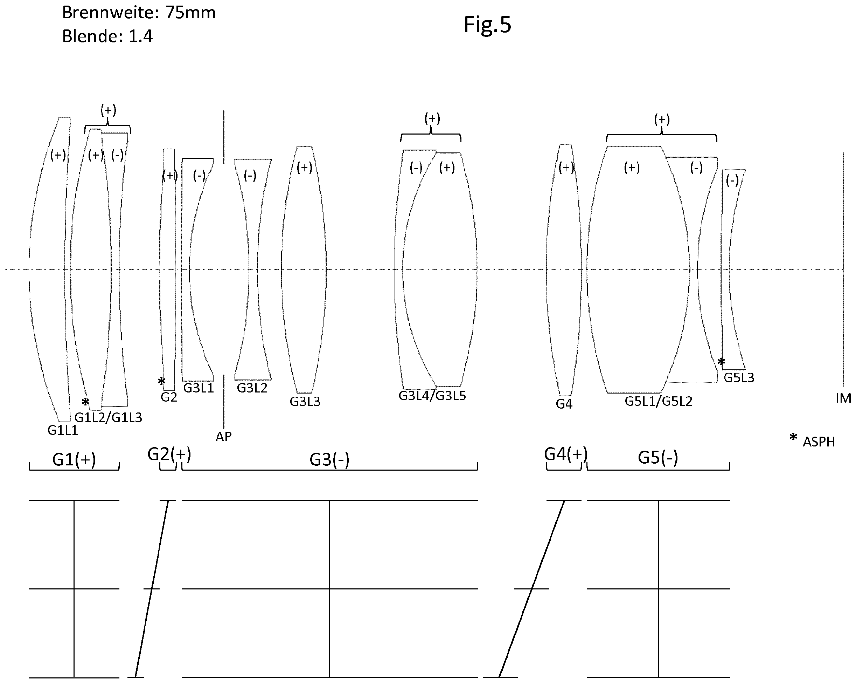

Bei einer alternativen Ausbildung besteht die Mittelgruppe aus fünf Linsengliedern und der Aperturblende (Irisblende), wobei das erste und das zweite Linsenglied negative, das dritte Linsenglied positive, das vierte Linsenglied negative und das fünfte Linsenglied positive Brechkraft aufweisen, wobei das vierte und das fünfte Linsenglied zu einem Linsenduplett mit positiver Gesamtbrechkraft zusammengefasst sind. Ein Ausführungsbeispiel mit einer solchen Mittelgruppe ist als Objektiv 1:1,4 75mm in Fig. 5 der Zeichnung dargestellt und wird anhand der Zeichnung noch genauer beschrieben.

Die feststehende Hinterlinsengruppe mit negativer Gesamtbrechkraft besteht aus drei Linsengliedern, wobei das erste Linsenglied positive, das zweite Linsenglied negative und das dritte Linsenglied negative Brechkraft aufweisen. Das erste und das zweite Linsenglied sind dabei vorzugsweise zu einem Linsenduplett mit positiver Gesamtbrechkraft zusammengefasst.

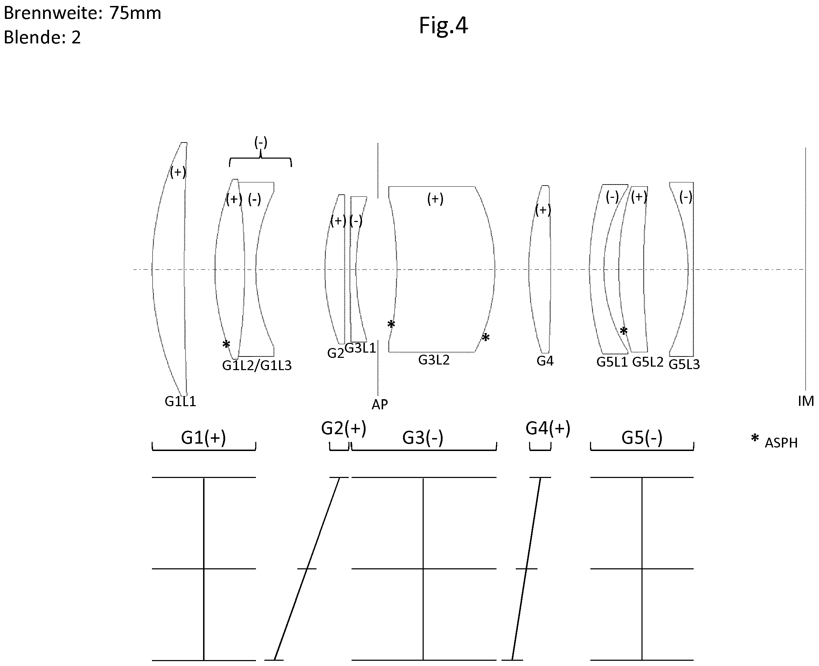

In einer alternativen Ausführung besteht die Hinterlinsengruppe aus drei Linsengliedern, wobei das erste negative, das zweite positive und das dritte negative Brechkraft aufweisen. Ein Ausführungsbeispiel mit einer solchen Hinterlinsengruppe ist als Objektiv 1:2 75mm in Fig. 4 der Zeichnung dargestellt und wird anhand der Zeichnung noch genauer beschrieben.

In mindestens einer der fünf Linsengruppen ist eine Linse mit einer oder zwei asphärischen Flächen zur Korrektur der monochromatischen Abbildungsfehler, wie Öffnungsfehler, Koma, Astigmatismus, Wölbung und Verzeichnung enthalten, wobei diese vorzugsweise in den feststehenden Linsengruppen vorgesehen sind.

Um eine für spiegellose Aufnahmesysteme geeignete kurze Schnittweite (z.B. kleiner 25mm, bezogen auf das Kleinbildformat) und für Bildaufnahmesensoren geeignete Lage der Austrittpupille gewährleisten zu können, enthält die Hinterlinsengruppe erfindungsgemäß mindestens eine Linse mit einem optischen Material mit Brechzahl ne größer 1,8. Auf diese Weise lassen sich auch Beschränkungen für die maximalen Durchmesser der Linsen aufgrund vom Kamera- oder Bildaufnahmesystem vorgegebener, begrenzender Durchmesser, z.B. eines Bajonetts, einhalten. Mit den vorstehend zu den fünf Linsengruppen, insbesondere den zur Hinterlinsengruppe genannten Merkmalen lassen sich Objektive mit einem ausreichend großen Abstand zwischen der Austrittspupille und der Abbildungsebene, z.B. größer 40mm realisieren. Auf diese Weise wird ein kleiner Lichteinfallswinkel, z.B. kleiner 35°, sichergestellt.

Die Mittelgruppe enthält mindestens eine Linse mit einem optischen Material mit anomaler Teildispersion (SCD) kleiner -0,07 oder größer 0,07 zur Korrektur der chromatischen Abbildungsfehler.

Die Frontlinsengruppe enthält mindestens eine Linse mit einem optischen Material mit anomaler Teildispersion (SCD) größer 0,07 zur Korrektur der chromatischen Abbildungsfehler.

Mindestens eine der Fokussiergruppen enthält eine Linse mit einem optischen Material mit anomaler Teildispersion (SCD) größer 0,07, um die bei der Fokussierung variierenden chromatischen Aberrationen möglichst gering zu halten.

Linsen mit einer anomalen Teildispersion haben die Aufgabe, die Wellenlängen des sekundären Spektrums (violettblauer Wellenlängenbereich) zu korrigieren. Die Teildispersion ist eine Eigenschaft des Glasmaterials, die das Verhältnis des Brechungsindex bei kurzen Wellenlängen, hier im violettblauen Wellenlängenbereich, zum Brechungsindex bei langen Wellenlängen, hier im roten Wellenlängenbereich, beschreibt. Bei Glasmaterialien mit anomaler Teildispersion weicht dieses Verhältnis ab von dem eines als Standard definierten Normalglasmaterials, wie z.B. N-F2, einem von der Firma Schott hergestellten Glas.

Es gibt eine positive und eine negative anomale Teildispersion. Die SCD-Werte, entweder positiv oder negativ, geben den Betrag und somit die Wirkung der anomalen Teildispersion an. Um die anomale Teildispersion des Glases für die Farbkorrektur nutzen zu können, bedarf es einer besonderen Kombination aus Brechkraft, Position der Linse im Bezug zur Blende und Vorzeichen der anomalen Teildispersion der jeweiligen Linse.

In der Zeichnung sind Ausführungsbeispiele der erfindungsgemäßen Objektive für das Kleinbildformat schematisch dargestellt und werden nachfolgend anhand der Figuren genauer beschrieben.

Dabei zeigen
- Fig. 1: einen Linsenschnitt durch ein Objektiv mit der Brennweite 75mm,
- Fig. 2: einen Linsenschnitt durch ein Objektiv mit der Brennweite 90mm,
- Fig. 3: zeigt einen Linsenschnitt durch ein Objektiv mit der Brennweite 75mm,
- Fig. 4: zeigt ebenfalls einen Linsenschnitt durch ein Objektiv mit der Brennweite 75mm und
- Fig. 5: den Linsenschnitt durch ein weiteres Objektiv mit der Brennweite 75mm,
- Fig. 6: einen Bildsensor in einer Abbildungsebene IM.

Unter den Linsenschnitten der Figuren sind die Bewegungswege der jeweiligen Linsengruppen beim Fokussiervorgang dargestellt. Horizontale Linien stellen die Positionen der Linsengruppen G1, G2, G3, G4 und G5 dar. Die oberen dieser Linien kennzeichnen die Positionen in der Fokuseinstellung Unendlich, die unteren in der Fokuseinstellung auf die kürzesten Objektentfernung und die mittleren in einer mittleren Fokuseinstellung. Die senkrechten Linien sind den ortsfesten Linsengruppen G1, G3 und G5 zugeordnet, die schrägen Linien den verschiebbaren Fokussiergruppen G2 und G4.

Die Linsenschnitte der Fig. 1 bis 4 gelten für Offenblende 2, während die Fig. 5 ein Objektiv mit der Offenblende 1,4 zeigt.

Bei dem in Fig. 1 dargestellten Objektiv weist die erste Linsengruppe G1 mit positiver Gesamtbrechkraft in Lichtrichtung eine Konvex-Konkav-Linse G1L1 positiver Brechkraft, eine Konvex-Konkav-Linse G1L2 positiver Brechkraft und ein Linsenduplett G1L3/G1L4 negativer Gesamtbrechkraft, bestehend aus einer Bikonvex-Linse G1L3 positiver Brechkraft und einer Bikonkav-Linse G1L4 negativer Brechkraft, auf. Diese als Frontlinsengruppe bezeichnete Linsengruppe ist feststehend. Die in Lichtrichtung erste Linsenfläche des Linsendupletts G1L3/G1L4 ist asphärisch ausgeführt.

Eine zweite und eine vierte Linsengruppe G2 und G4 haben positive Brechkraft und werden gleichzeitig zum Fokussieren entlang der darunter angegebenen Linien verschoben. Beide Fokussierglieder sind als Einzellinsen ausgeführt.

Zwischen den Fokussiergliedern ist eine feststehende Linsengruppe G3 negativer Gesamtbrechkraft angeordnet, die aus einer ersten Konvex-Konkavlinse G3L1 negativer Brechkraft und einer zweiten Konkav-Konvex-Linse G3L2 positiver Brechkraft besteht. Diese Mittelgruppe ist feststehend und schließt eine Aperturblende (Irisblende) AP ein.

Die ebenfalls feststehende Hinterlinsengruppe G5 besitzt insgesamt negative Brechkraft und besteht aus einer ersten Bikonvex-Linse G5L1 positiver Brechkraft und einer zweiten Bikonkav-Linse G5L2 negativer Brechkraft, die als Kittglied mit insgesamt positiver Brechkraft zusammengefügt sind, und einer dritten Konkav-Konvex-Linse G1L3 negativer Brechkraft.

Der in Fig. 2 dargestellte Linsenschnitt weicht von dem zu Fig. 1 beschriebenen Linsenschnitt lediglich in der Hinterlinsengruppe G5 ab, wobei die Linsen G5L1, G5L2 und G5L3 als Einzellinsen mit der Brechkraft-Folge (-), (+), (-) ausgeführt sind. Außerdem sind drei der Linsenflächen als asphärische Flächen ausgeführt.

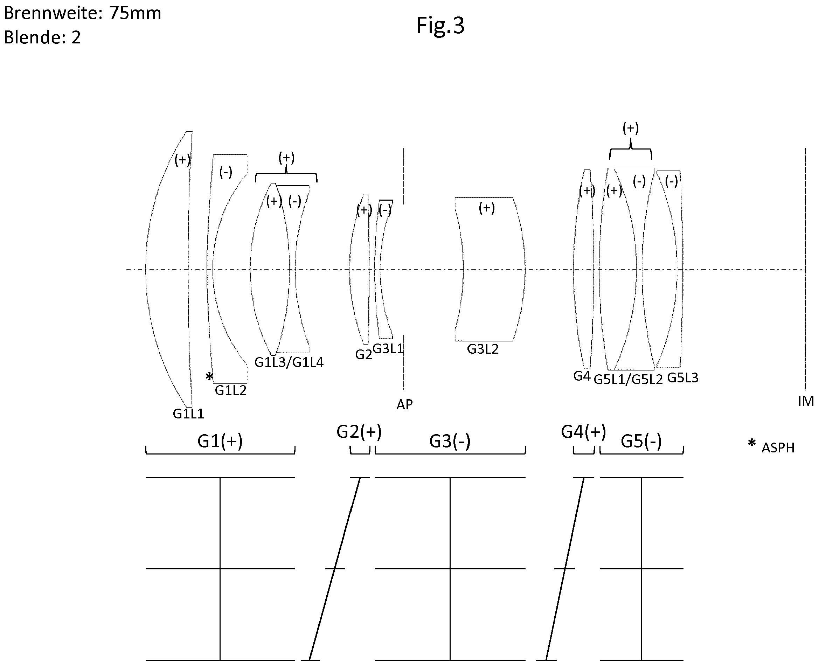

Der in Fig. 3 dargestellte Linsenschnitt weicht von dem zu Fig. 1 beschriebenen Linsenschnitt lediglich in der Frontlinsengruppe G1 ab, indem die Linse G1L2 als Konvex-Konkav-Linse mit negativer Brechkraft und mit asphärischer Frontfläche realisiert ist und das Kittglied G1L3/G1L4 insgesamt positive Brechkraft aufweist.

Der in Fig. 4 dargestellte Linsenschnitt weicht von dem zu Fig. 1 beschriebenen Linsenschnitt in der Gestaltung der Frontlinsengruppe G1 ab, die hier aus nur zwei Linsengliedern besteht, einer ersten Konvex-Konkav-Linse G1L1 positiver Brechkraft und einem Linsenduplett G1L2/G1L3 negativer Gesamtbrechkraft, bestehend aus einer Bikonvex-Linse G1L2 positiver Brechkraft und einer Bikonkav-Linse G1L3 negativer Brechkraft. Zusätzlich ist die Hinterlinsengruppe G5 aus drei Einzellinsen G5L1, G5L2 und G5L3 mit der Brechkraft-Folge wie zu Fig. 2 dargestellt. Außerdem sind eine Mehrzahl von Flächen asphärisch ausgeführt.

Bei dem in Fig. 5 dargestellten Linsenschnitt besteht die Frontlinsengruppe aus zwei Linsengliedern, wobei das zweite als Kittglied G1L2/G1L3 mit insgesamt positiver Brechkraft ausgeführt ist. Die Mittelgruppe G3 besteht aus einer ersten Konvex-Konkav-Linse G3L1 negativer Brechkraft vor der Aperturblende (Irisblende) AP, einer zweiten Bikonkav-Linse G3L2 negativer Brechkraft hinter der Aperturblende (Irisblende) AP, einer Bikonvex-Linse positiver Brechkraft G3L3 und einem vierten, als Kittglied ausgeführten Linsenglied G3L4/G3L5 mit insgesamt positiver Brechkraft. Die Hinterlinsengruppe G5 besteht aus zwei Linsengliedern, von denen das erste als Linsenduplett (Kittglied) mit einer Bikonvex-Linse G5L1 positiver Brechkraft und einer Bikonkav-Linse G5L2 negativer Brechkraft ausgebildet ist und einer dünnen Konvex-Konkav-Linse negativer Brechkraft. Die konvexe Linsenfläche ist asphärisch ausgeführt.

Die Abbildung erfolgt jeweils auf eine Bildebene IM.

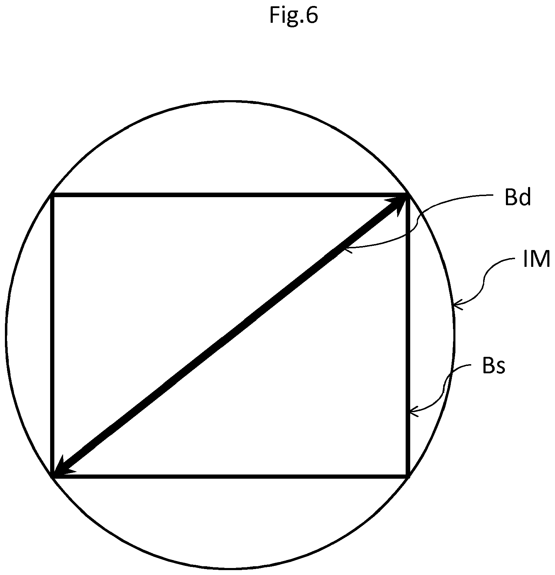

Bei der in Fig. 6 schematisch dargestellten kreisrunden Abbildungsebene IM ist mit einem Doppelpfeil ein Bildkreisdurchmesser Bd dargestellt, der mit dem Durchmesser eines rechteckig dargestellten Bildsensors Bs übereinstimmt.

Für alle Linsenschnitte betreffenden Figuren der Zeichnung gilt, dass die mit einem * gekennzeichneten Linsenflächen asphärisch ausgeführt sind.

Die Linsenschnitte in der Zeichnung sind maßstäblich dargestellt, so dass sich relative Angaben, wie z.B. die in Fig. 1 beim Linsenglied G3L1 in der Linsenmitte erheblich dünnere Materialstärke auf im Vergleich zur Materialstärke am Linsenrand, mit herkömmlichen geometrischen Mitteln, zeichnerisch feststellen und überprüfen lassen. Ebenso ist auf diese Weise offenbart, dass in Fig. 1 das Linsenglied G3L2 in der Linsenmitte eine um nahezu genau 4-fach (4,25-fach) dickere Materialstärke aufweist als das Linsenglied G2. Diese Zusammenhänge ergeben sich für den Fachmann ohne weiteres.

Die einzeln dargestellten und beschriebenen fünf Linsengruppen stellen in allen Objektivvarianten einen im Einzelnen notwendigen, in sich abgeschlossenen Bestandteil dar. Jede der Linsengruppen kann für sich optisch abgestimmt werden, was insbesondere durch das für jede Linsengruppe angegebene Brennweitenverhältnis zur Gesamtbrennweite zum Ausdruck kommt.

Konkrete Ausführungsbeispiele ergeben sich aus den nachstehenden Tabellen für Objektive mit 75mm und 90mm mit einer Offenblendenzahl von 2 und 1,4, wobei die Brennweiten jeweils auf das bekannte Kleinfilmformat (43,3mm Bildkreisdurchmesser) bezogen sind.

| | **Fig.1** | | | | |
|---|---|---|---|---|---|
| | 1:2 75mm | **Brechungsindex ne** | **Abbezahl ve** | **SCD** | **Brechkraft [Dpt.]** |
| G1 | G1L1 | 1,85504 | 23,59 | 0,153 | 15,1 |
| | G1L2 | 1,49845 | 81,15 | 0,240 | 3,0 |
| | G1L3 | 1,62033 | 63,02 | 0,082 | -16,5 |
| | G1L4 | 1,81264 | 25,22 | 0,131 | |
| G2 | | 1,49845 | 81,15 | 0,240 | 12,3 |
| G3 | G3L1 | 1,59911 | 38,97 | -0,019 | -12,0 |
| | G3L2 | 1,88815 | 40,52 | -0,107 | 1,1 |
| G4 | | 1,62033 | 63,02 | 0,082 | 12,6 |
| G5 | G5L1 | 1,88815 | 40,52 | -0,107 | 7,9 |
| | G5L2 | 1,60718 | 37,76 | -0,012 | |
| | G5L3 | 1,59492 | 40,47 | -0,019 | -13,3 |

| | **Fig.2** | | | | |
|---|---|---|---|---|---|
| | 1:2 90mm | **Brechungsindex ne** | **Abbezahl ve** | **SCD** | **Brechkraft [Dpt.]** |
| G1 | G1L1 | 1,85504 | 23,59 | 0,153 | 10,1 |
| | G1L2 | 1,49845 | 81,15 | 0,240 | 9,2 |
| | G1L3 | 1,49845 | 81,15 | 0,240 | -18,5 |
| | G1L4 | 1,74617 | 28,07 | 0,075 | |
| G2 | | 1,49845 | 81,15 | 0,240 | 10,9 |
| G3 | G3L1 | 1,72538 | 34,47 | -0,089 | -13,2 |
| | G3L2 | 1,51872 | 63,96 | -0,012 | 2,2 |
| G4 | | 1,60520 | 65,16 | 0,07 2 | 16,8 |
| G5 | G5L1 | 1,65803 | 39,46 | -0,119 | -12,6 |
| | G5L2 | 1,85500 | 23,69 | 0,172 | 14,4 |
| | G5L3 | 1,62409 | 36 | -0,001 | -17,0 |

| | **Fig.3** | | | | |
|---|---|---|---|---|---|
| | 1:2 75mm | **Brechungsindex ne** | **Abbezahl ve** | **SCD** | **Brechkraft [Dpt.]** |
| G1 | G1L1 | 1,85649 | 32,03 | -0,005 | 17,1 |
| | G1L2 | 1,55098 | 45,49 | -0,007 | -16,9 |
| | G1L3 | 1,6203 3 | 63,02 | 0,082 | 1,6 |
| | G1L4 | 1,67765 | 31,85 | 0,042 | |
| G2 | | 1,49845 | 81,15 | 0,240 | 14,3 |
| G3 | G3L1 | 1,67765 | 31,85 | 0,042 | -13,1 |
| | G3L2 | 1,60520 | 65,16 | 0,072 | 2,6 |
| G4 | | 1,88815 | 40,52 | -0,107 | 14,4 |
| G5 | G5L1 | 1,88815 | 40,52 | -0,107 | 6,0 |
| | G5L2 | 1,61664 | 44,27 | -0,147 | |
| | G5L3 | 1,65222 | 33,53 | 0,022 | -13,4 |

| | **Fig.4** | | | | |
|---|---|---|---|---|---|
| | 1:2 75mm | **Brechungsindex ne** | **Abbezahl ve** | **SCD** | **Brechkraft [Dpt.]** |
| G1 | G1L1 | 1,81643 | 22,57 | 0,286 | 14,5 |
| | G1L2 | 1,43985 | 94,49 | 0,327 | -15,0 |
| | G1L3 | 1,74617 | 28,07 | 0,075 | |
| G2 | | 1,43985 | 94,49 | 0,327 | 12,1 |
| G3 | G3L1 | 1,81643 | 22,57 | 0,286 | -18,3 |
| | G3L2 | 1,60520 | 65,16 | 0,072 | 11,7 |
| G4 | | 1,60520 | 65,16 | 0,072 | 14,4 |
| G5 | G5L1 | 1,65803 | 39,46 | -0,119 | -11,1 |
| | G5L2 | 1,97188 | 17,33 | 0,755 | 12,1 |
| | G5L3 | 1,62408 | 36,16 | 0,002 | -18,1 |

| | **Fig.5** | | | | |
|---|---|---|---|---|---|
| | 1:1.4 75mm | **Brechungsindex ne** | **Abbezahl ve** | **SCD** | **Brechkraft [Dpt.]** |
| G1 | G1L1 | 1,85504 | 23,59 | 0,153 | 9,5 |
| | G1L2 | 1,49845 | 81,15 | 0,240 | 1,0 |
| | G1L3 | 1,65803 | 39,46 | -0,119 | |
| | G1L4 | 1,49845 | 81,15 | 0,240 | 3,2 |
| G2 | | 1,76859 | 26,3 | 0,112 | -16,2 |
| G3 | G3L1 | 1,72539 | 34,47 | -0,092 | -18,9 |
| | G3L2 | 1,88815 | 40,52 | -0,107 | 18,6 |
| | G3L3 | 1,70442 | 29,89 | 0,047 | 6,3 |
| | G3L4 | 1,49845 | 81,15 | 0,240 | |
| G4 | | 1,62033 | 63,02 | 0,082 | 10,2 |
| G5 | G5L1 | 1,93429 | 18,74 | 0,553 | 1,0 |
| | G5L2 | 1,81643 | 22,57 | 0,286 | |
| | G5L3 | 1,85504 | 23,59 | 0,153 | -11,9 |

## Patentansprüche

1. Objektiv fester Brennweite, bestehend aus fünf Linsengruppen, wobei drei (G1, G3, G5) ortsfest und zwei (G2, G4) entlang einer optischen Achse verschiebbar gelagert sind, **dadurch gekennzeichnet, dass**
a) eine von einer Objektseite her gesehen erste Frontlinsengruppe (G1) ortsfest,
b) eine zweite Linsengruppe mit positiver Brechkraft als Fokussiervordergruppe (G2) verschiebbar,
c) eine eine in ihrer Öffnung verstellbare ortsfeste Irisblende (AP) enthaltende dritte Linsengruppe als Mittelgruppe (G3) ortsfest,
d) eine vierte Linsengruppe mit positiver Brechkraft als Fokussierhintergruppe (G4) verschiebbar und
e) eine fünfte Hinterlinsengruppe (G5) ortsfest
bezüglich einer Abbildungsebene (IM) in einem Objektivtubus angeordnet sind und sowohl die Fokussiervordergruppe (G2) als auch die Fokussierhintergruppe (G4) zum Fokussieren des Objektivs auf Objekte in unterschiedlichen Objektentfernungen gemeinsam relativ zueinander und zu den ortsfest angeordneten Linsengruppen (G1, G3, G5) bewegbar sind und die Frontlinsengruppe (G1) positive Brechkraft, die Mittelgruppe (G3) und die Hinterlinsengruppe (G5) negative Brechkraft aufweisen.

2. Objektiv nach Anspruch 1, **dadurch gekennzeichnet, dass** sich sowohl die Fokussiervordergruppe (G2) als auch die Fokussierhintergruppe (G4) beim Fokussieren von Unendlich in die Naheinstellung von der Abbildungsebene (IM) entfernen.

3. Objektiv nach Anspruch 1 oder 2, **dadurch gekennzeichnet, dass**
a) das Verhältnis f1/f der Brennweiten f1 der Frontlinsengruppe (G1) und f des gesamten Objektivs zwischen 0,5 und 30 liegt,
b) das Verhältnis f2/f der Brennweiten f2 der Fokussiervordergruppe (G2) und f des gesamten Objektivs zwischen 0,3 und 10 liegt,
c) das Verhältnis f3/f der Brennweiten f3 der Mittelgruppe (G3) und f des gesamten Objektivs zwischen -30 und -0,3 liegt,
d) das Verhältnis f4/f der Brennweiten f4 der Fokussierhintergruppe (G4) und f des gesamten Objektivs zwischen 0,1 und 10 liegt und
e) das Verhältnis f5/f der Brennweiten f5 der Hinterlinsengruppe (G5) und f des gesamten Objektivs zwischen -40 und -0,1 liegt.

4. Objektiv nach einem der vorhergehenden Ansprüche, **dadurch gekennzeichnet, dass** das Objektiv ein Verhältnis der Gesamtbrennweite f zum Bildkreisdurchmesser in der Abbildungsebene (IM) zwischen 1 und 5 aufweist.

5. Objektiv nach einem der vorhergehenden Ansprüche, **dadurch gekennzeichnet, dass** das Verhältnis V des Volumens der jeweiligen Fokussierglieder (G2, G4) zum Bildkreisdurchmesser (Bd) in der Abbildungsebene (IM) in der dritten Potenz unter 0,1 (V / Bd³ < 0,1), insbesondere unter 0,08 liegt oder das Gewicht der jeweiligen Fokussiergruppe (G2, G4) unter 15 g (Gramm) liegt.

6. Objektiv nach einem der vorhergehenden Ansprüche, **dadurch gekennzeichnet, dass** entweder
a) die Frontlinsengruppe (G1) aus vier Linsengliedern (G1L1, G1L2, G1L3, G1L4) besteht, wobei das erste Linsenglied (G1L1) positive, das zweite Linsenglied (G1L2) positive, das dritte Linsenglied (G1L3) positive und das vierte Linsenglied (G1L4) negative Brechkraft aufweisen, wobei das dritte Linsenglied (G1L3) und das vierte Linsenglied (G1L4) zu einem Linsenduplett (G1L3, G1L4) mit negativer Gesamtbrechkraft zusammengefasst sind oder
b) die Frontlinsengruppe (G1) aus vier Linsengliedern (G1L1, G1L2, G1L3, G1L4) besteht, wobei das erste Linsenglied (G1L1) positive, das zweite Linsenglied (G1L2) negative, das dritte Linsenglied (G1L3) positive und das vierte Linsenglied (G1L4) negative Brechkraft aufweisen, wobei das dritte Linsenglied (G1L3) und das vierte Linsenglied (G1L4) zu einem Linsenduplett (G1L3, G1L4) mit positiver Gesamtbrechkraft zusammengefasst sind oder
c) die Frontlinsengruppe (G1) aus drei Linsengliedern (G1L1, G1L2, G1L3) besteht, wobei das erste Linsenglied (G1L1) positive, das zweite Linsenglied (G1L2) positive und das dritte Linsenglied (G1L3) negative Brechkraft aufweisen, wobei das zweite Linsenglied (G1L2) und das dritte Linsenglied (G1L3) zu einem Linsenduplett (G1L2, G1L3) mit negativer oder positiver Gesamtbrechkraft zusammengefasst sind.

7. Objektiv nach einem der vorhergehenden Ansprüche, **dadurch gekennzeichnet, dass** entweder
a) die Mittelgruppe (G3) aus zwei Linsengliedern (G3L1, G3L2) und der Irisblende (AP) besteht, wobei das erste Linsenglied (G3L1) negative und das zweite Linsenglied (G3L2) positive Brechkraft aufweisen und zwischen beiden ortsfest die Irisblende (AP) angeordnet ist oder
b) die Mittelgruppe (G3) aus fünf Linsengliedern (G3L1, G3L2, G3L3, G3L4, G3L5) und der Irisblende (AP) besteht, wobei das erste Linsenglied (G3L1) negative Brechkraft, das zweite Linsenglied (G3L2) negative Brechkraft, das dritte Linsenglied (G3L3) positive Brechkraft, das vierte Linsenglied (G3L4) negative Brechkraft, das fünfte Linsenglied (G3L5) positive Brechkraft aufweisen, wobei das vierte Linsenglied (G3L4) und das fünfte Linsenglied (G3L5) zu einem Linsenduplett (G3L4, G3L5) mit positiver Gesamtbrechkraft zusammengefasst sind, und die Irisblende (AP) ortsfest zwischen dem ersten Linsenglied (G3L1) und dem zweiten Linsenglied (G3L2) angeordnet ist.

8. Objektiv nach einem der vorhergehenden Ansprüche, **dadurch gekennzeichnet, dass** entweder
a) die Hinterlinsengruppe (G5) aus drei Linsengliedern (G5L1, G5L2, G5L3) besteht, wobei das erste Linsenglied (G5L1) positive, das zweite Linsenglied (G5L2) negative und das dritte Linsenglied (G5L3) negative Brechkraft aufweisen, wobei das erste Linsenglied (G5L1) und das zweite Linsenglied (G5L2) zu einem Linsenduplett (G5L1, G5L2) mit positiver Gesamtbrechkraft zusammengefasst sind oder
b) die Hinterlinsengruppe (G5) aus drei Linsengliedern (G5L1, G5L2, G5L3) besteht, wobei das erste Linsenglied (G5L1) negative, das zweite Linsenglied (G5L2) positive und das dritte Linsenglied (G5L3) negative Brechkraft aufweisen.

9. Objektiv nach einem der vorhergehenden Ansprüche, **dadurch gekennzeichnet, dass** in mindestens einer der fünf Linsengruppen (G1, G2, G3, G4, G5) eine Linse mit einer oder zwei asphärischen Flächen enthalten ist, vorzugsweise in den feststehenden Linsengruppen (G1, G3, G5).

10. Objektiv nach einem der vorhergehenden Ansprüche, **dadurch gekennzeichnet, dass** die Hinterlinsengruppe (G5) mindestens eine Linse mit einem optischen Material mit Brechzahl ne größer 1.8 enthält.

11. Objektiv nach einem der vorhergehenden Ansprüche, **dadurch gekennzeichnet, dass** die Mittelgruppe (G3) mindestens eine Linse mit einem optischen Material mit anomaler Teildispersion SCD kleiner -0,07 oder größer 0,07 enthält.

12. Objektiv nach einem der vorhergehenden Ansprüche, **dadurch gekennzeichnet, dass** die Frontlinsengruppe (G1) mindestens eine Linse mit einem optischen Material mit anomaler Teildispersion SCD größer 0,07 enthält.

13. Objektiv nach einem der vorhergehenden Ansprüche, **dadurch gekennzeichnet, dass** mindestens eine der Fokussiergruppen (G2, G4) eine Linse mit einem optischen Material mit anomaler Teildispersion SCD größer 0,07 enthält.

## Claims

1. Objective having a fixed focal length, consisting of five lens groups, wherein three lens groups (G1, G3, G5) are spatially fixed and two lens groups (G2, G4) are displaceable along an optical axis, **characterized in that**
a) a first front lens group (G1), viewed from an object side, is spatially fixed,
b) a second lens group having a positive refractive power as a focusing front group (G2) is displaceable,
c) a third lens group, containing a spatially fixed iris diaphragm (AP) that has an adjustable opening, as a centre group (G3) is spatially fixed,
d) a fourth lens group having a positive refractive power as a focusing rear group (G4) is displaceable and
e) a fifth back lens group (G5) is spatially fixed with respect to an imaging plane (IM) in an objective tube, and both the focusing front group (G2) and the focusing rear group (G4) are movable together relative to one another and to the lens groups (G1, G3, G5) that are spatially fixed for focusing the objective at objects at different object distances, and the front lens group (G1) has a positive refractive power, and the centre group (G3) and the back lens group (G5) have a negative refractive power.

2. Objective according to Claim 1, **characterized in that** both the focusing front group (G2) and the focusing rear group (G4) move away from the imaging plane (IM) when focusing from infinity to near focus.

3. Objective according to Claim 1 or 2, **characterized in that**
a) the ratio f1/f of the focal lengths f1 of the front lens group (G1) and f of the entire objective lies between 0.5 and 30,
b) the ratio f2/f of the focal lengths f2 of the focusing front group (G2) and f of the entire objective lies between 0.3 and 10,
c) the ratio f3/f of the focal lengths f3 of the centre group (G3) and f of the entire objective lies between -30 and -0.3,
d) the ratio f4/f of the focal lengths f4 of the focusing rear group (G4) and f of the entire objective lies between 0.1 and 10, and
e) the ratio f5/f of the focal lengths f5 of the back lens group (G5) and f of the entire objective lies between -40 and -0.1.

4. Objective according to one of the preceding claims, **characterized in that** the objective has a ratio of the total focal length f to the image circle diameter in the imaging plane (IM) of between 1 and 5.

5. Objective according to one of the preceding claims, **characterized in that** the ratio V of the volume of the respective focussing elements (G2, G4) to the image circle diameter (Bd) in the imaging plane (IM) to the power of three lies below 0.1 (V/Bd³<0.1), in particular below 0.08, or the weight of the respective focusing group (G2, G4) is below 15 g (grams).

6. Objective according to one of the preceding claims, **characterized in that** either
a) the front lens group (G1) consists of four lens elements (G1L1, G1L2, G1L3, G1L4), wherein the first lens element (G1L1) has a positive refractive power, the second lens element (G1L2) has a positive refractive power, the third lens element (G1L3) has a positive refractive power and the fourth lens element (G1L4) has a negative refractive power, wherein the third lens element (G1L3) and the fourth lens element (G1L4) are combined to form a lens doublet (G1L3, G1L4) having a negative total refractive power, or
b) the front lens group (G1) consists of four lens elements (G1L1, G1L2, G1L3, G1L4), wherein the first lens element (G1L1) has a positive refractive power, the second lens element (G1L2) has a negative refractive power, the third lens element (G1L3) has a positive refractive power and the fourth lens element (G1L4) has a negative refractive power, wherein the third lens element (G1L3) and the fourth lens element (G1L4) are combined to form a lens doublet (G1L3, G1L4) having a positive total refractive power, or
c) the front lens group (G1) consists of three lens elements (G1L1, G1L2, G1L3), wherein the first lens element (G1L1) has a positive refractive power, the second lens element (G1L2) has a positive refractive power and the third lens element (G1L3) has a negative refractive power, wherein the second lens element (G1L2) and the third lens element (G1L3) are combined to form a lens doublet (G1L2, G1L3) having a negative or positive total refractive power.

7. Objective according to one of the preceding claims, **characterized in that** either
a) the centre group (G3) consists of two lens elements (G3L1, G3L2) and the iris diaphragm (AP), wherein the first lens element (G3L1) has a negative refractive power and the second lens element (G3L2) has a positive refractive power and the iris diaphragm (AP) is arranged between the two in a spatially fixed manner, or
b) the centre group (G3) consists of five lens elements (G3L1, G3L2, G3L3, G3L4, G3L5) and the iris diaphragm (AP), wherein the first lens element (G3L1) has a negative refractive power, the second lens element (G3L2) has a negative refractive power, the third lens element (G3L3) has a positive refractive power, the fourth lens element (G3L4) has a negative refractive power, the fifth lens element (G3L5) has a positive refractive power, wherein the fourth lens element (G3L4) and the fifth lens element (G3L5) are combined to form a lens doublet (G3L4, G3L5) having a positive total refractive power, and the iris diaphragm (AP) is arranged in a spatially fixed manner between the first lens element (G3L1) and the second lens element (G3L2).

8. Objective according to one of the preceding claims, **characterized in that** either
a) the back lens group (G5) consists of three lens elements (G5L1, G5L2, G5L3), wherein the first lens element (G5L1) has a positive refractive power, the second lens element (G5L2) has a negative refractive power and the third lens element (G5L3) has a negative refractive power, wherein the first lens element (G5L1) and the second lens element (G5L2) are combined to form a lens doublet (G5L1, G5L2) having a positive total refractive power, or
b) the back lens group (G5) consists of three lens elements (G5L1, G5L2, G5L3), wherein the first lens element (G5L1) has a negative refractive power, the second lens element (G5L2) has a positive refractive power and the third lens element (G5L3) has a negative refractive power.

9. Objective according to one of the preceding claims, **characterized in that** a lens with one or two aspheric surfaces is contained in at least one of the five lens groups (G1, G2, G3, G4, G5), preferably in the fixed lens groups (G1, G3, G5).

10. Objective according to one of the preceding claims, **characterized in that** the back lens group (G5) contains at least one lens having an optical material with a refractive index ne of greater than 1.8.

11. Objective according to one of the preceding claims, **characterized in that** the centre group (G3) contains at least one lens having an optical material with anomalous partial dispersion SCD of less than -0.07 or greater than 0.07.

12. Objective according to one of the preceding claims, **characterized in that** the front lens group (G1) contains at least one lens having an optical material with anomalous partial dispersion SCD of greater than 0.07.

13. Objective according to one of the preceding claims, **characterized in that** at least one of the focusing groups (G2, G4) contains a lens having an optical material with anomalous partial dispersion SCD of greater than 0.07.

## Revendications

1. Objectif à distance focale fixe constitué de cinq groupes de lentilles,
trois (G1, G3, G5) d'entre eux étant fixes et deux (G2, G4) d'entre eux étant montés mobiles le long d'un axe optique, **caractérisé en ce que**
a) un groupe de lentilles frontales (G1) placé en position fixe en premier lorsqu'il est vu depuis un côté objet,
b) un deuxième groupe de lentilles présentant une puissance optique positive est disposé mobile en tant que groupe de mise au point avant (G2),
c) un troisième groupe de lentilles contenant un diaphragme à iris (AP) fixe à ouverture réglable est disposé en position fixe en tant que groupe intermédiaire (G3),
d) un quatrième groupe de lentilles présentant une puissance optique positive est disposé mobile en tant que groupe de mise au point arrière (G4), et
e) un cinquième groupe de lentilles arrière (G5) est disposé en position fixe par rapport à un plan de formation d'image (IM) dans un tube d'objectif, et le groupe de mise au point avant (G2) et le groupe de mise au point arrière (G4) peuvent tous deux être déplacés l'un par rapport à l'autre et par rapport aux groupes de lentilles fixes (G1, G3, G5), afin de mettre au point l'objectif sur des objets situés à des distances objets différentes et le groupe de lentilles frontales (G1) présente une puissance optique positive, le groupe de lentilles intermédiaire (G3) et le groupe de lentilles arrière (G5) présentent une puissance optique négative.

2. Objectif selon la revendication 1, **caractérisé en ce que** le groupe de mise au point avant (G2) et le groupe de mise au point arrière (G4) s'éloignent tous deux du plan de formation d'image (IM) lors de la mise au point de l'infini vers le gros plan.

3. Objectif selon la revendication 1 ou 2, **caractérisé en ce que**
a) le rapport f1/f des distances focales f1 du groupe de lentilles frontales (G1) et f de l'objectif entier se situe entre 0,5 et 30,
b) le rapport f2/f des distances focales f2 du groupe de mise au point avant (G2) et f de l'objectif entier se situe entre 0,3 et 10,
c) le rapport f3/f des distances focales f3 du groupe intermédiaire (G3) et f de l'objectif complet se situe entre -30 et -0,3,
d) le rapport f4/f des distances focales f4 du groupe de mise au point arrière (G4) et f de l'objectif complet se situe entre 0,1 et 10 ; et
e) le rapport f5/f des distances focales f5 du groupe de lentilles arrière (G5) et f de l'objectif entier se situe entre -40 et -0,1.

4. Objectif selon l'une des revendications précédentes, **caractérisé en ce que** l'objectif présente un rapport de la distance focale totale f au diamètre du cercle image dans le plan de formation d'image (IM) compris entre 1 et 5.

5. Objectif selon l'une des revendications précédentes, **caractérisé en ce que** le rapport V du volume des éléments de mise au point (G2, G4) respectifs au diamètre (Bd) du cercle image dans le plan de formation d'image (IM) à la puissance trois est inférieur à 0,1 (V/Bd³ < 0,1) et notamment à 0,08 ou **en ce que** le poids du groupe de mise au point (G2, G4) respectif est inférieur à 15 g (grammes).

6. Objectif selon l'une des revendications précédentes, **caractérisé en ce que** soit
a) le groupe de lentilles frontales (G1) est constitué de quatre éléments de lentilles (G1L1, G1L2, G1L3, G1L4), le premier élément de lentille (G1L1) présentant une puissance optique positive, le deuxième élément de lentille (G1L2), une puissance optique positive, le troisième élément de lentille (G1L3), une puissance optique positive et le quatrième élément de lentille (G1L4), une puissance optique négative, le troisième élément de lentille (G1L3) et le quatrième élément de lentille (G1L4) étant combinés pour former un doublet de lentilles (G1L3, G1L4) présentant une puissance optique totale négative, soit
b) le groupe de lentilles frontales (G1) est constitué de quatre éléments de lentilles (G1L1, G1L2, G1L3, G1L4), le premier élément de lentille (G1L1) présentant une puissance optique positive, le deuxième élément de lentille (G1L2), une puissance optique négative, le troisième élément de lentille (G1L3), une puissance optique positive et le quatrième élément de lentille (G1L4), une puissance optique négative, le troisième élément de lentille (G1L3) et le quatrième élément de lentille (G1L4) étant combinés pour former un doublet de lentilles (G1L3, G1L4) présentant une puissance optique totale positive, soit
c) le groupe de lentilles frontales (G1) est constitué de trois éléments de lentilles (G1L1, G1L2, G1L3), le premier élément de lentille (G1L1) présentant une puissance optique positive, le deuxième élément de lentille (G1L2), une puissance optique positive et le troisième élément de lentille (G1L3), une puissance optique négative, le deuxième élément de lentille (G1L2) et le troisième élément de lentille (G1L3) étant combinés pour former un doublet de lentilles (G1L2, G1L3) présentant une puissance optique totale négative ou positive.

7. Objectif selon l'une des revendications précédentes, **caractérisé en ce que** soit
a) le groupe intermédiaire (G3) est constitué de deux éléments de lentilles (G3L1, G3L2) et du diaphragme à iris (AP), le premier élément de lentille (G3L1) présentant une puissance optique négative et le deuxième élément de lentille (G3L2), une puissance optique positive et le diaphragme à iris (AP) étant disposé de manière fixe entre ces deux éléments, soit
b) le groupe intermédiaire (G3) est constitué de cinq éléments de lentilles (G3L1, G3L2, G3L3, G3L4, G3L5) et du diaphragme à iris (AP), le premier élément de lentille (G3L1) présentant une puissance optique négative, le deuxième élément de lentille (G3L2), une puissance optique négative, le troisième élément de lentille (G3L3), une puissance optique positive, le quatrième élément de lentille (G3L4), une puissance optique négative et le cinquième élément de lentille (G3L5), une puissance optique positive, le quatrième élément de lentille (G3L4) et le cinquième élément de lentille (G3L5) étant combinés pour former un doublet de lentilles (G3L4, G3L5) présentant une puissance optique totale positive, et le diaphragme à iris (AP) étant disposé de manière fixe entre le premier élément de lentille (G3L1) et le deuxième élément de lentille (G3L2).

8. Objectif selon l'une des revendications précédentes, **caractérisé en ce que** soit
a) le groupe de lentilles arrière (G5) est constitué de trois éléments de lentilles (G5L1, G5L2, G5L3), le premier élément de lentille (G5L1) présentant une puissance optique positive, le deuxième élément de lentille (G5L2), une puissance optique négative et le troisième élément de lentille (G5L3), une puissance optique négative, le premier élément de lentille (G5L1) et le deuxième élément de lentille (G5L2) étant combinés pour former un doublet de lentilles (G5L1, G5L2) présentant une puissance optique totale positive, soit
b) le groupe de lentilles arrière (G5) est constitué de trois éléments de lentilles (G5L1, G5L2, G5L3), le premier élément de lentille (G5L1) présentant une puissance optique négative, le deuxième élément de lentille (G5L2), une puissance optique positive et le troisième élément de lentille (G5L3), une puissance optique négative.

9. Objectif selon l'une des revendications précédentes, **caractérisé en ce qu'**au moins l'un des cinq groupes de lentilles (G1, G2, G3, G4, G5) contient une lentille présentant une ou deux surfaces asphériques, de préférence dans les groupes de lentilles fixes (G1, G3, G5).

10. Objectif selon l'une des revendications précédentes, **caractérisé en ce que** le groupe de lentilles arrière (G5) contient au moins une lentille comprenant un matériau optique présentant un indice de réfraction ne supérieur à 1,8.

11. Objectif selon l'une des revendications précédentes, **caractérisé en ce que** le groupe intermédiaire (G3) contient au moins une lentille comprenant un matériau optique présentant une dispersion partielle anormale SCD inférieure à -0,07 ou supérieure à 0,07.

12. Objectif selon l'une des revendications précédentes, **caractérisé en ce que** le groupe de lentilles frontales (G1) contient au moins une lentille comprenant un matériau optique présentant une dispersion partielle SCD anormale supérieure à 0,07.

13. Objectif selon l'une des revendications précédentes, **caractérisé en ce qu'**au moins l'un des groupes de mise au point (G2, G4) contient une lentille comprenant un matériau optique présentant une dispersion partielle SCD anormale supérieure à 0,07.
